(19) Europäisches Patentamt
European Patent Office
Office européen des brevets

(11) Numéro de publication: 0 005 398
B1

(12) # FASCICULE DE BREVET EUROPEEN

(45) Date de publication du fascicule du brevet: **27.01.82**

(51) Int. Cl.³: **A 22 B 5/00**

(21) Numéro de dépôt: **79400271.7**

(22) Date de dépôt: **26.04.79**

(54) **Appareillage destiné au travail des animaux de boucherie.**

(30) Priorité: **27.04.78 FR 7812509**

(43) Date de publication de la demande: **14.11.79 Bulletin 79/23**

(45) Mention de la délivrance du brevet: **27.01.82 Bulletin 82/4**

(84) Etats contractants désignés: **BE CH DE FR GB IT NL SE**

(56) Documents cités:
**CA - A - 1 019 112**
**FR - A - 1 566 768**
**US - A - 3 168 937**

(73) Titulaire: **LUCHAIRE S.A.**
**180, Boulevard Haussmann**
**F-75008 Paris (FR)**

(72) Inventeur: **Mantrant, Jacques**
**42, Rue Franklin**
**F-78500 Sartrouville (FR)**

(74) Mandataire: **de Boisse, Louis**
**37, Avenue Franklin D. Roosevelt**
**F-75008 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

EP 0 005 398 B1

# Appareillage destiné au travail des animaux de boucherie

La présente invention se rapporte au travail que doivent subir les animaux de boucherie après leur abattage.

Elle a pour objectif principal de créer un appareillage qui permette d'effectuer commodément les opérations nécessaires au travail d'un animal, à savoir, notamment:

— le transfert des pattes arrières,
— le dépouillement ou "habillage" de l'animal,
— la fente du quasi,
— la fente du sternum,
— l'éviscération et le prélèvement des abats rouges,
— le découpage longitudinal de l'animal appelé "fente vertébrale".

Cet appareillage comporte une plate-forme mobile pour supporter un opérateur et équipée d'un outillage de travail, et un bâti supportant la plate-forme, qui peut monter et descendre dans le bâti, auquel est en outre associée une voie de manutention, le long de laquelle on peut déplacer les animaux, et il est caractérisé en ce que la plate-forme comporte une ouverture, dans laquelle peut passer l'animal lorsque la plate-forme se déplace verticalement, et un passage pour la déplacement de l'opérateur tout autour de l'animal.

La description qui va suivre en regard des dessins annexés, donnée à titre d'exemple non limitatif, fera bien comprendre comment l'invention peut être réalisée, les particularités qui ressortent tant du dessin que du texte faisant bien entendu partie de ladite invention.

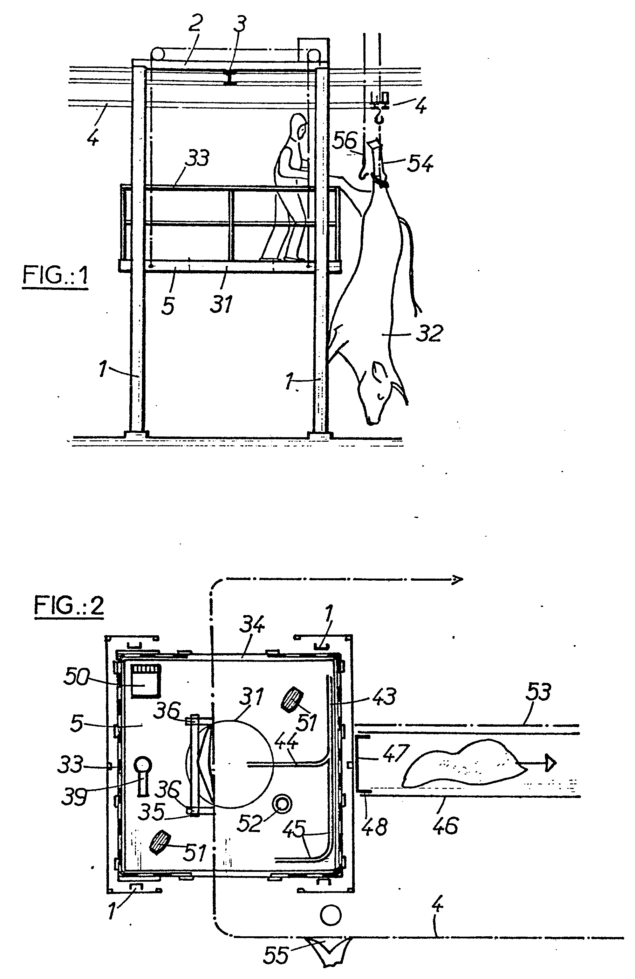

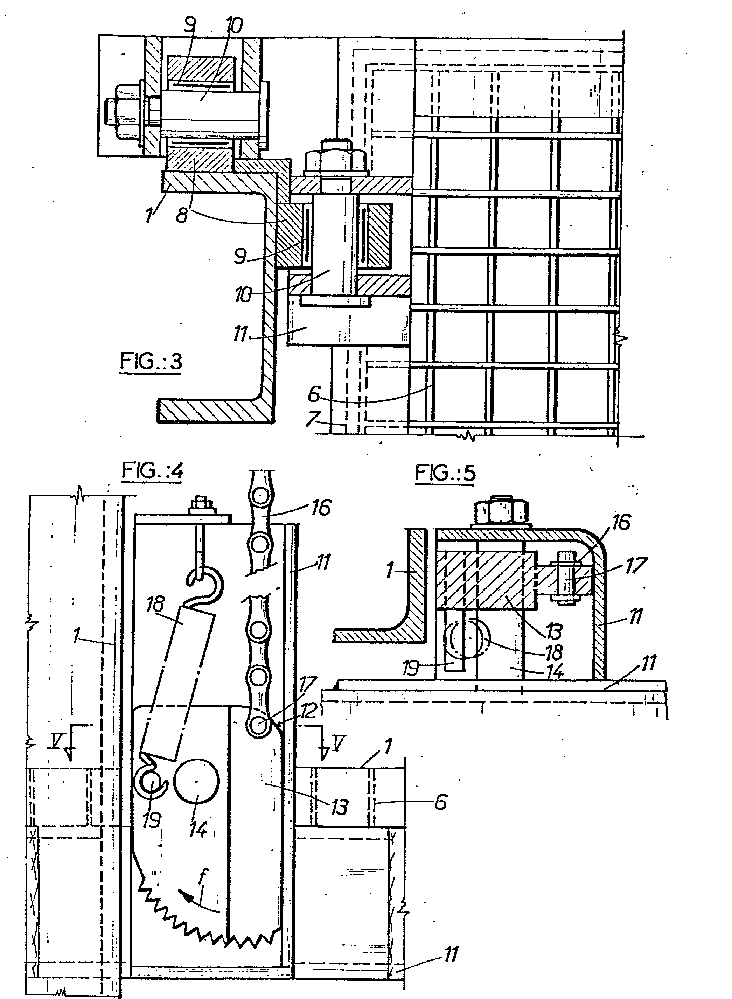

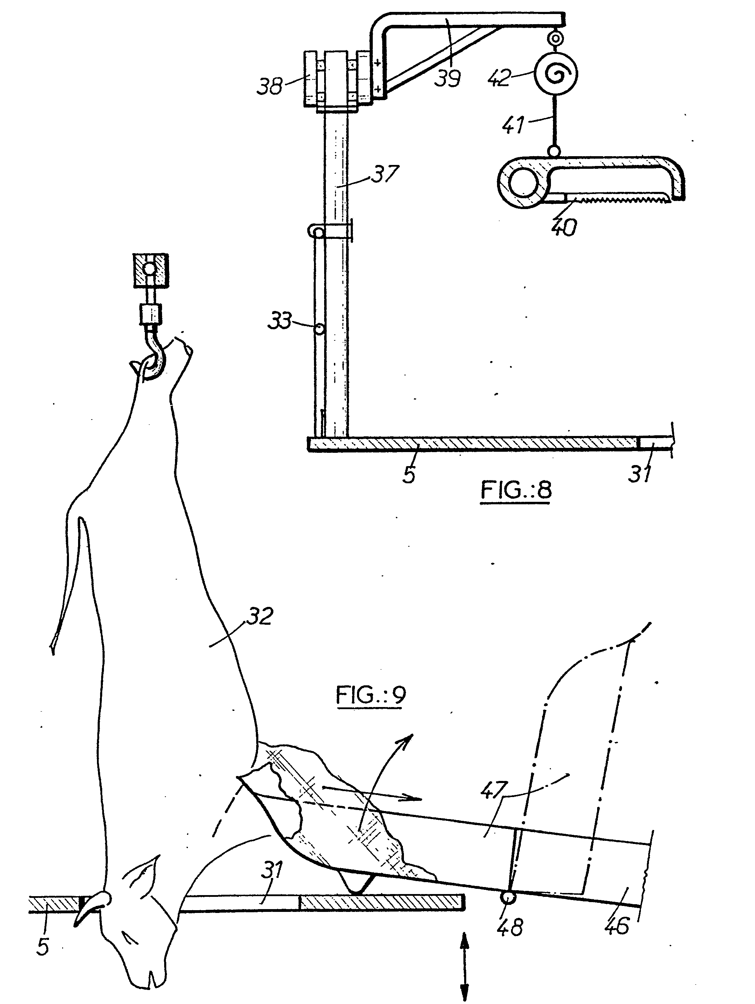

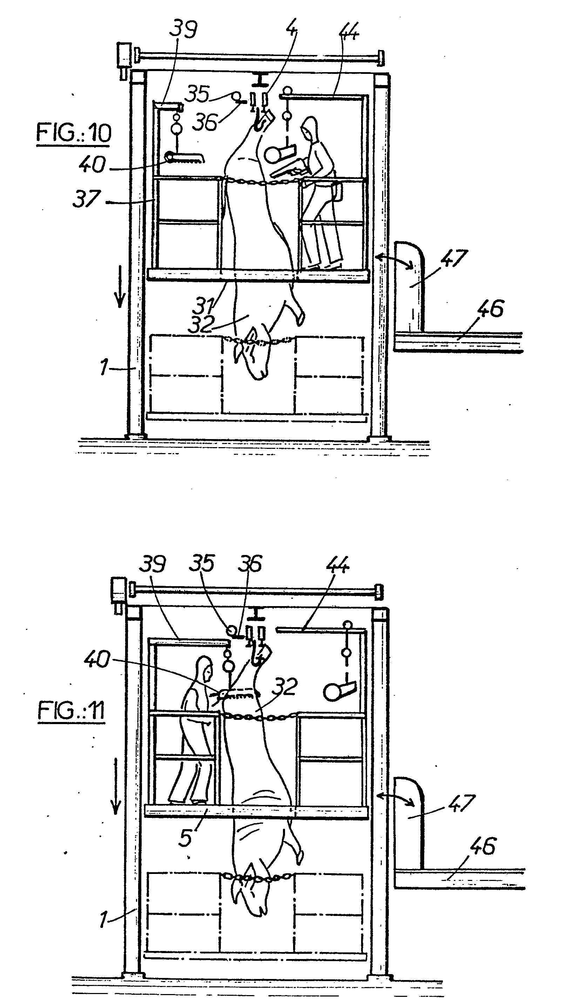

La figure 1 est une vue schématique, en élévation latérale, d'un appareillage conforme à l'invention; la figure 2 est une vue schématique en plan de l'appareillage; la figure 3 est une coupe de détail du mécanisme de guidage de la plate-forme sur un poteau; la figure 4 est une coupe verticale d'un support d'angle montrant un parachute; la figure 5 est une coupe horizontale par V—V de la figure 4; les figures 6 et 7 sont des schémas illustrant respectivement la commande du déplacement de la plate-forme par moteur électrique et par vérin; la figure 8 est un croquis de détail montrant l'agencement d'une potence porte-scie sur la plate-forme; la figure 9 est un croquis montrant l'agencement d'une goulotte d'éviscération; les figures 10 et 11 sont des vues d'ensemble illustrant certaines des opérations que subit l'animal.

Dans l'exemple de réalisation représenté sur le dessin, l'appareillage comporte quatre poteaux 1 scellés au sol aux sommets d'un rectangle et entretoisés à leur partie supérieure par des traverses 2 sous lesquelles passe le support 3 d'une voie de manutention 4 servant à l'arrivée des animaux abattus et à l'évacuation des quartiers de viande (figure 1).

Les poteaux sont constitués par des profilés, par exemple des U à ailes parallèles, orientés deux à deux en sens inverses comme le montre la figure 2.

Le plateforme 5 comporte un plancher en caillebotis 6 posé sur un cadre rigide 7 comme on le voit mieux sur la figure 3. Elle est guidée le long des poteaux 1 au moyen de galets 8 montés à l'aide de roulements 9 à aiguilles sur des axes 10 que présentent des supports-guides 11 solidaires du cadre 7. A chaque poteau correspondent deux galets disposés à angle droit l'un par rapport à l'autre et coopérant respectivement avec le dose et une aile du poteau.

Chaque support-guide 11 est équipé d'un parachute 12 qui peut comporter, comme le montrent les figures 4 et 5, une came 13 articulée sur ledit support, autour d'un axe horizontal 14 parallèle à l'une des faces verticales du poteau 1. La came 13 présente une face dentée 15 excentrée par rapport à l'axe 14 de façon que, si la came tourne dans le sens de la flèche *f* de la figure 4, ladite denture vienne se coincer sur la face adjacente du poteau 1.

Normalement, la came 13 est suspendue à une chaîne 16 articulée à un axe 17 situé, par rapport à l'axe 14, à l'opposé du poteau 1 et elle est accrochée, au moyen d'un ressort de traction 18, au support 11 en un point 19 situé entre l'axe 14 et le poteau 1.

Tant que la plateforme demeure suspendue à la chaîne 16 la came 13 reste plaquée contre le support 11, comme le montre la figure 4 et la plateforme peut librement monter et descendre.

Si la chaîne casse ou se relâche, alors, sous l'effet du ressort 18, la came tourne dans le sens de la flèche et se coince par la denture 15 contre le poteau 1, ce qui arrête la chute de la plateforme.

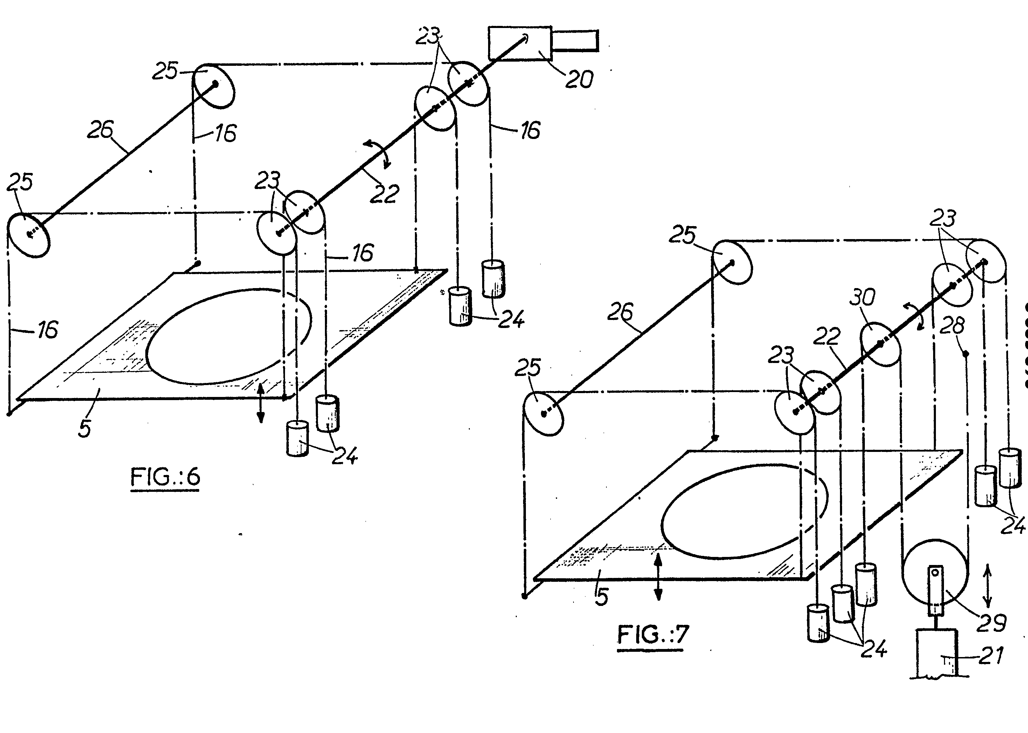

Le mouvement de la plateforme est commandé par un mécanisme moteur qui peut être un motoréducteur 20 (figure 6) ou un vérin 21 (figure 7) pneumatique par exemple, attaquant un arbre 22 monté en tête de deuc des poteaux 1.

L'arbre 22 porte quatre pignons 23 sur lesquels passent les chaînes 16 qui sont accrochées aux parachutes des supports respectifs de la plateforme. Pour chaque chaîne, l'extrémité opposée de celle qui est attachée au support porte un contrepoids 24 destiné à équilibrer la masse de la plateforme, au moins en partie, et à maintenir les chaînes tendues. Deux des chaînes 16 passent en outre sur des pignons de renvoi 25 montés sur un axe auxiliaire 26 parallèle à l'arbre 22.

Dans le cas d'un vérin 21, l'entraînement de l'arbre 22 s'effectue grâce à une chaîne 27 accrochée à un point fixe 28 et qui passe sur des pignons 29 et 30 montés l'un sur la tige du vérin et l'autre sur l'arbre 22.

En revenant aux figures 1 et 2, on constate que la plateforme 5 comporte dans sa partie centrale une ouverture circulaire 31 di diamètre suffisant pour laisser le passage à l'animal abattu 32 suspendu par les pattes arrière à la voie de manutention 4.

Elle comporte aussi un garde-fou 33 échancré latéralement par deux fois en 34 sur le trajet que l'animal décrit lorsqu'on le déplace le long de la voie de manutention.

L'ouverture 31, qui peut avoir un diamètre de l'ordre du mètre est excentrée par rapport au plan vertical de la voie 4, par exemple d'une vingtaine de centimètres, pour tenir compte de la forme de l'animal abattu qui est asymétrique.

La plateforme est encore équipée d'un écarteur 35 disposé à côté de la voie 4 et qui permet d'écarter les pattes arrière de l'animal pour la préparation de celui-ci, différemment selon les opérations effectuées. Cet écarteur comporte un support horizontal parallèle à la voie et des butées réglables 36.

Près du bord de la plateforme, au milieu de celle-ci, sur un côté dont le garde-fou n'est pas échancré, est prévue une colonne verticale 37 au sommet de laquelle est articulée, sur un palier 38, une potence 39 équipée d'une scie à moteur 40 suspendue à un câble 41 muni d'un enrouleur équilibreur 42 (figure 8). L'opérateur peut disposer la potence vers le milieu de la plateforme, déplacer la scie comme il le veut puis ramener la potence sur le côté afin qu'elle ne le gêne pas.

Du côté de la plateforme opposé à celui où est montée la potence 39, est encore prévu un monorail latéral 43 le long duquel peuvent circuler des scies destinées aux diverses opérations qui seront décrites plus loin. Ce monorail présente deux ramifications, l'une 44 dirigée vers le milieu de la plateforme et l'autre 45 qui se prolonge le long d'un côté de celle-ci et fait un léger coude au delà, du côté où arrive l'animal (figure 2). Le monorail peut être monté sur des colonnes analogues à la colonne 37 de la potence; les scies sont suspendues aussi des enrouleurs équilibreurs.

A côté de la plateforme, dans l'axe de la ramification centrale 44 du monorail, est prévue une goulotte 46 d'évacuation des viscères, dirigée obliquement vers l'extérieur. Cette goulotte est munie, à son extrémité voisine de la plateforme, d'une auge 47 articulée autour d'un axe transversal 48 et qui peut, soit être escamotée latéralement comme représenté en traits mixtes sur la figure 9, soit être rabattue vers l'animal et posée sur le plancher de la plateforme, pour recevoir les viscères 49 (en traits pleins sur la figure 9).

Revenant à la figure 2, on y distingue encore sur la plateforme:

— un lavabo stérilisateur 50,

— des pédales mobiles 51 permettant à l'opérateur de manoeuvrer la plateforme en des endroits différents de son choix,

— une pomme de douche 52.

A côté de la plateforme on trouve, outre la goulotte 46, un transporteur tel qu'un monorail 53 pour l'inspection des abats rouges et des réceptacles, ou transporteurs divers pour les abats, la masse abdominale, les cuirs et les déchets.

La plateforme que l'on vient de décrire peut être utilisée comme suit:

L'animal 32 arrive suspendu par une patte à la voie 4 au moyen d'un garrot de saignée 54, comme on le voit sur la figure 1. L'opérateur l'immobilise au voisinage de la plateforme, à l'endroit désigné par 55 sur la figure 2 et il procède à "l'habillage des pattes".

A cet effet, la plateforme étant située à mi-hauteur, il coupe l'extrémité de la patte libre et commence à la dépouiller. Il accroche alors l'animal par ladite patte à un chariot de la voie 4, à l'aide d'un crochet de transfert 56 (figure 1), enlève le garrot de saignée et habille de même l'autre patte, qu'il accroche à un autre chariot toujours à l'aide du crochet 56.

Ensuite, comme le montre la figure 10, l'opérateur abaisse la plateforme, déplace l'animal le long de la voie 4 pour l'amener au-dessus de l'ouverture 31, relève la plateforme, écarte les pattes arrière au moyen de l'écarteur 35 et procède à la fente du quasi au moyen d'une scie accrochée à la branche 44 du monorail.

In poursuit alors l'habillage ou dépouillement de l'animal en abaissant la plateforme au fur et à mesure des besoins.

Lorsque le dépouillement est terminé, l'opérateur procède à la fente du sternum avec la scie appropriée accrochée à la branche 44 du monorail puis, après avoir abaissé l'auge 47, comme le montre la figure 9, il procède à l'éviscération, séparant les abats blancs des abats rouges qu'il accroche au rail 53 en vue de leur inspection par le vétérinaire de service.

La dernière opération qu'illustre la figure 11 s'effectue, après relèvement de l'auge 47 puis soulèvement de la plateforme. L'opérateur fend l'animal en deux, dans le sens longitudinal en utilisant la scie 40 de la potence 39. La tête de l'animal reste attenante à l'une des moitiés.

L'opérateur libère alors les deux demi-carcasses de l'écarteur 35, 36 et les évacue par la voie 4 également en vue de leur inspection par le vétérinaire.

Outre les pédales 51, on peut prévoir une boîte à boutons avec présélection pour la commande de certaines des opérations telles que le transfert de l'animal, la fente du quasi, la fente du sternum et l'éviscération.

Toutes les opérations peuvent être faites par une seule personne.

Il va de soi que les modes de réalisation décrits ne sont que des exemples et qu'il serait possible de les modifier, notamment par substitution d'équivalents techniques, sans sortir pour cela du cadre de l'invention telle qu'indiquée dans les revendications.

**Revendications**

1. Appareillage permettant d'effectuer le travail d'animaux de boucherie après leur abattage et comportant une plateforme mobile (5) pour supporter un opérateur, et équipée d'un outillage de travail, et un bâti (1—2) supportant la plateforme (5), qui peut monter et descendre dans le bâti (1—2), auquel est en outre associée une voie de manutention (4), le long de laquelle on peut déplacer les animaux, caractérisé en ce que la plateforme (5) comporte une ouverture (31), dans laquelle peut passer l'animal lorsque la plateforme (5) se déplace verticalement, et un passage pour le déplacement de l'opérateur tout autour de l'animal.

2. Appareillage selon la revendication 1, caractérisé en ce que le bâti (1—2) est à cheval sur la voie de manutention (4).

3. Appareillage selon la revendication 2, caractérisé en ce que la plateforme (15) comporte un garde-fou (33) échancré selon la trajet de l'animal (32) déplacé le long de la voie de manutention (4) afin de permettre le déplacement dudit animal (32).

4. Appareillage selon l'une quelconque des revendications 1 à 3, dans lequel le bâti comporte des poteaux verticaux (1) le long desquels la plateforme (5) est guidée, caractérisé en ce que les poteaux (1) comportent des faces verticales inclinées les unes par rapport aux autres, par exemple à angle droit, et sur lesquelles roulent des galets (8), convenablement orientés, montés sur la plateforme (5).

5. Appareillage selon la revendication 4, dans lequel la plateforme (5) est munie de parachutes (12), caractérisé en ce que les parachutes (12) comportent des blocs oscillants formant cames (13) rappelés élastiquement en position de blocage sur les poteaux (1) et par lesquels la plateforme est suspendue à l'encontre de la force élastique de rappel.

6. Appareillage selon la revendication 5, caractérisé en ce que la suspension s'effectue au moyen d'organes tels que des chaînes (16) passant sur des organes de renvoi (23, 25) prévus en tête des poteaux (1), certains de ces organes étant moteurs.

7. Appareillage selon la revendication 6, caractérisé en ce que des contrepoids (24) sont prévus pour équilibrer au moins en partie la masse de la plateforme (5) et maintenir les organes de suspension (16) tendus.

8. Appareillage selon l'une quelconque des revendications 1 à 7, caractérisé en ce que la plateforme (5) comporte un cadre (7) supportant un plancher (6) dans lequel est ménagée l'ouverture (31) destinée au passage de l'animal (32).

9. Appareillage selon l'une quelconque des revendications 1 à 8, caractérisé en ce que la plateforme (5) comporte un monorail (43) le long duquel peut se déplacer au moins une scie à moteur.

10. Appareillage selon la revendication 9, caractérisé en ce que le monorail (43) comporte deux branches dirigées l'une (44) vers le milieu de la plateforme et l'autre (45) vers l'un des côtés de celle-ci.

11. Appareillage selon l'une quelconque des revendications 1 à 10 comportant un accessoire d'évacuation des viscères, caractérisé en ce que ledit accessoire est une goulotte (46) comportant une auge articulée (47) que l'on peut rabattre sur la plateforme (5).

12. Appareillage selon l'une quelconque des revendications 1 à 11, caractérisé en ce qu'il est associé à un transporteur (53) permettant l'inspection des abats rouges.

13. Appareillage selon l'une quelconque des revendications 1 à 12, caractérisé en ce que la plateforme (5) comporte des appareils de stérilisation (50) et de nettoyage (52).

14. Appareillage selon l'une quelconque des revendications 1 à 13, caractérisé en ce que la plateforme (5) est équipée de plusieurs pédales mobiles (51) disposées autour de l'ouverture (31) et permettant de commander son déplacement de plusieurs endroits différents au choix de l'opérateur.

**Patentansprüche**

1. Vorrichtung zum Verarbeiten von Schlachttieren nach dem Abschlachten, mit einer beweglichen Plattform (5) für einen Fleischer, die mit Arbeitsgeräten ausgerüstet ist und einem die Plattform (5) tragenden Gestell (1, 2), in dem die Plattform (5) auf- und abbewegbar ist, wobei dem Gestell unter anderem eine Förderbahn (4) zugeordnet ist, längs der Schlachttiere bewegbar sind, gekennzeichnet durch eine Öffnung (31) in der Plattform (5), durch die das Schlachttier passieren kann, wenn sich die Plattform vertikal bewegt und einen Gang für die Standortveränderung des Fleischers rund um xas Schlachttier.

2. Vorrichtung nach Anspruch 1, dadurch gekennzeichnet, daß das Gestell die Förderbahn (4) übergreift.

3. Vorrichtung nach Anspruch 2, dadurch gekennzeichnet, daß die Plattform (5) eine Geländer (33) aufweist, das im Bewegungsweg des längs der Förderbahn (4) bewegten Schlachttieres (32) ausgeschnitten ist, um den Transport des Schlachttieres (32) zu ermöglichen.

4. Vorrichtung nach einem der Ansprüche 1 bis 3, mit einem Gestell mit vertikalen Pfosten (1), längs denen die Plattform (5) geführt ist, dadurch gekennzeichnet, daß die Pfosten (1) vertikale Flächen aufweisen, die winklig, z.B. rechtwinklig, zueinander orientiert sind und auf denen geeignet angeordnete Rollen abrollen, die an der Plattform gelagert sind.

5. Vorrichtung nach Anspruch 1, bei der die Plattform (5) mit Fangvorrichtungen (12) ausgerüstet ist, dadurch gekennzeichnet, daß die Fangvorrichtungen (12) schwenkbare Bremsblöcke aufweisen, die als elastisch in Blockierstellung an die Pfosten (1) andrückbare Bremsnocken (13) ausgebildet sind und durch die die Plattform entgegen der elastischen Rückstellkraft abgestützt ist.

6. Vorrichtung nach Anspruch 5, dadurch gekennzeichnet, daß zur Aufhängung der Plattform (5) Aufhängeorgane, wie Ketten (16), dienen, die über an den oberen Pfostenenden angeordnete Umlenkorgane (23, 25) geführt sind, wobei einige dieser Organe antreibbar sind.

7. Vorrichtung nach Anspruch 6, gekennzeichnet durch Gegengewichte (24) zum mindestens teilweisen Ausgleich der Masse der Plattform (5) und zum Straffhalten der Aufhängeorgane (16).

8. Vorrichtung nach einem der Ansprüche 1 bis 7, dadurch gekennzeichnet, daß die Plattform (5) einen Rahmen (7) aufweist, der einen Boden (6) trägt, in dem die Öffnung (31) für den Durchlaß des Schlachttieres (32) angeordnet ist.

9. Vorrichtung nach einem der Ansprüche 1 bis 8, dadurch gekennzeichnet, daß die Plattform (5) eine Einschienenbahn (43) aufweist, längs der mindestens eine Motorsäge bewegbar ist.

10. Vorrichtung nach Anspruch 9, dadurch gekennzeichnet, daß die Einschienenbahn (43) zwei Abzweigungen aufweist, von denen die eine (44) zur Mitte der Plattform hin und die andere (45) zu einer Plattformseite hin gerichtet ist.

11. Vorrichtung nach einem der Ansprüche 1 bis 10, mit einer Zusatzeinrichtung zur Entfernung der Eingeweide, dadurch gekennzeichnet, daß die Zusatzeinrichtung eine Schurre (46) ist, die eine gelenkig befestigte Mulde (47) aufweist, die auf die Plattform (5) abklappbar ist.

12. Vorrichtung nach einem der Ansprüche 1 bis 11, dadurch gekennzeichnet, daß sie einer Transporteinrichtung (53) zugeordnet ist, die die Prüfung der roten Innereien gestattet.

13. Vorrichtung nach einem der Ansprüche 1 bis 12, dadurch gekennzeichnet, daß die Plattform (5) Einrichtungen zum Sterilisieren (50) und zum Reinigen (52) aufweist.

14. Vorrichtung nach einem der Ansprüche 1 bis 13, dadurch gekennzeichnet, daß die Plattform (5) mit mehreren beweglichen Pedalen (51) ausgerüstet ist, die um die Öffnung (31) angeordnet sind un die es dem Fleischer gestatten, die Stellung der Plattform von mehreren verschiedenen Standpunkten aus nach seiner Wahl zu steuern.

**Claims**

1. Apparatus enabling work to be carried out on the bodies of animals in an abattoir after they have been slaughtered, comprising a mobile platform (5) to take an operator and fitted with an implement to carry out the work, and a framework (1—2) supporting the platform (5) which can move up and down in the framework (1—2) to which a handling rail (4) is also attached, along which the animals can be moved, characterised in that the platform (5) comprises an opening (31), into which the animal can pass when the platform (5) is moved vertically, and a passageway enabling the operator to move all round the animal.

2. Apparatus according to claim 1, characterised in that the framework (1—2) is positioned across the handling rail (4).

3. Apparatus according to claim 2, characterised in that the platform (15) comprises a guard-rail (33) which is indented according to the path of the animal (32) moved along the handling rail (4) so as to allow the said animal (32) to be moved.

4. Apparatus according to any one of claims 1 to 3, in which the framework comprises vertical posts (1) along which the platform (5) is guided, characterised in that the posts (1) comprise vertical surfaces which are inclined in relation to each other, for example at right angles, and along which rollers (8) run, suitably positioned and mounted on the platform (5).

5. Apparatus according to claim 4, in which the platform (5) is fitted with safety-catches (12), characterised in that the safety-catches (12) comprise pivoting blocks forming cams (13) which are drawn back resiliently into blocking position on the posts (1) and by which the platform is suspended against the resilient return force.

6. Apparatus according to claim 5, characterised in that the suspension is effected by means of mechanisms such as chains (16) which pass along the return mechanisms (23, 25) provided at the top of the posts (1), certain of these mechanisms being motors.

7. Apparatus according to claim 6, characterised in that counterbalances (24) are provided to at least partly balance the weight of the platform (5) and to keep the suspension mechanisms (16) taut.

8. Apparatus according to any one of claims 1 to 7, characterised in that the platform (5) comprises a frame (7) supporting a floor (6) in which the opening (31) is located to allow the animal (32) to pass through.

9. Apparatus according to any one of claims 1 to 8, characterised in that the platform (5) comprises a monorail (43) along which at least one motorised saw can be moved.

10. Apparatus according to claim 9, characterised in that the monorail (43) comprises two branches, one (44) directed towards the middle of the platform and the other (45) directed towards the sides of the platform.

11. Apparatus according to any one of claims 1 to 10, comprising an accessory for the removal of internal organs, characterised in that the said accessory is an outlet (46) comprising an articulated trough (47) which can be folded against the platform (5).

12. Apparatus according to any one of claims 1 to 11, characterised in that it is connected to a conveyor (53) enabling inspection of the internal organs.

13. Apparatus according to any one of claims 1 to 12, characterised in that the platform (5) comprises sterilising equipment (50) and cleaning equipment (52).

14. Apparatus according to any one of claims 1 to 13, characterised in that the platform (5) is fitted with several movable pedals (51) which are arranged around the opening (31) and which enable the platform to be moved to several different places, as the operator chooses.

2
3
4
4
56
54
33
FIG.:1
5
31
32
1
1

FIG.:2
34
1
50
31
43
53
36
51
5
44
47
33
39
36
35
52
48
46
45
51
1
4
55

9
10
1
8
9
10
11
FIG.: 3
6
7
FIG.: 4
16
11
18
1
17
12
V
V
1
19
14
13
6
f
11
FIG.: 5
16
17
1
11
13
18
19
14
11

25
26
16
25
23
20
16
23
22
16
16
5
24
24
FIG.:6
25
23
26
30
28
25
22
23
24
5
29
24
21
FIG.:7

38
39
42
41
37
40
33
5
31
FIG.:8
32
FIG.:9
47
31
48
46
5

FIG.:10
39
4
44
35
36
40
37
47
46
31
32
1

FIG.:11
39
35
36
44
40
32
47
46
5
1